# EUROPEAN PATENT APPLICATION

(11) **EP 3 974 663 A1**
(43) Date of publication of application: **30.03.2022**
(21) Application number: 20382852.0
(22) Date of filing: 25.09.2020
(51) Int. Cl.: F16B 12/32, F16B 12/40, F16B 12/14, F16B 12/10, F16B 12/20

(54) **ATTACHMENT SYSTEM BETWEEN TWO COMPONENTS**

(71) Applicant: Gaviota Simbac, S.L., 03630 Sax Alicante (ES)
(72) Inventor: Ballester Pérez, Ignacio, 03630 Sax (Alicante) (ES); Guillen Chico, Francisco Vicente, 03630 Sax (Alicante) (ES)
(74) Representative: Carlos Hernando, Borja

(57) **Abstract**

The present invention, an attachment system between two components, preferably two components of a piece of furniture, relates to an attachment system, especially designed for furniture, in particular metal furniture, preferably made of aluminium, whether for indoors or outdoors, which enables the same to be assembled and disassembled with ease, as it enables the components or parts, sometimes tubular profiles, which it comprises, to be connected by means of the use of common tools.

## Description

### OBJECT OF THE INVENTION

The present invention, an attachment system between two components, preferably two components of a piece of furniture, relates to an attachment system, especially designed for furniture, in particular metal furniture, preferably made of aluminium, whether for indoors or outdoors, which enables the same to be assembled and disassembled with ease, as it enables the components or parts, sometimes tubular profiles, which it comprises, to be connected by means of the use of common tools.

The field of application of the present invention belongs within the industry sector dedicated to the manufacture of furniture, such as armchairs, sofas, loungers, tables, chairs, flowerpots and lamps, among others, focusing particularly on the field of aluminium metal furniture, encompassing the field of attachment and anchoring systems at the same time.

### BACKGROUND OF THE INVENTION

At present, metal furniture for outdoor use is manufactured by means of welding or connection methods of the different parts that make up the furniture and that do not enable the assembly/disassembly thereof. This means that, although some of them may be able to fold, the storage and transport thereof requires occupying a space greater than that which can be occupied by the disassembled set of parts and profiles that make up the furniture.

The objective of the present invention is, therefore, to develop an attachment system to enable the components, parts and/or tubular profiles which a piece of metal furniture, such as armchairs, sofas, loungers, tables, chairs, flowerpots and lamps, among others, comprises to be connected easily and simply by using commonly used tools such as a screwdriver.

### DESCRIPTION OF THE INVENTION

The first object of the invention is therefore an attachment system according to claim 1. The attachment system is preferably applicable to furniture, such as armchairs, sofas, loungers, tables, chairs, flowerpots and lamps, among others, although it can also be used for connecting components of other products.

What the invention proposes, as noted above, is an attachment system between two components, which preferably make up a piece of furniture together with other components that are connected together, which comprises:
- A first component,
- A second component with a second housing and at least one threaded hole, preferably two, with the longitudinal axis thereof perpendicular to the longitudinal axis of said second housing,
- An attachment bolt with two sides, a first side for attaching to the first component, and a second connection side, opposite the first side, for inserting it into the second housing of the second component, and said second side having at least one perimetral groove that coincides with the at least one hole when said second side is inserted into the second housing of the second component, and
- a connection screw between the second component and the bolt by means of inserting it through the at least one hole.

As mentioned, the attachment system is preferably applicable to furniture, particularly for aluminium metal furniture, whether for indoors or outdoors, and the purpose of which is to enable the components, parts and/or tubular profiles that make up said furniture to be assembled and disassembled with ease, as it enables two components, for example, a part and a tubular profile, to be connected by means of the simple use of common tools.

To this end, and more specifically, said system essentially comprises a bolt attached to one of the components, for example, an aluminium part and one or several screws which, threaded in holes made in the second component, for example, an aluminium profile, lock the bolt and, consequently, secure the attachment between both components, i.e., the part and the profile.

Thereby, all the components, parts and profiles that the furniture comprises, by including the described attachment system arranged in the appropriate places, can be easily assembled and disassembled by using a screwdriver to screw or unscrew the set screws.

The groove arranged on the second side of the bolt is preferably conical, although other cross-sections are possible depending on the construction needs. Preferably, the tip of the screw is conical in shape, such that it fits into the conical grooves of the bolt, although other screw tips are possible.

The attachment between the bolt and the first component, specifically between the first component and the first side of the bolt, can be carried out in different ways. For example, the attachment between both of them can be carried out by means of complementary threads made both in the bolt and in a first housing of the first component such that the bolt is screwed into said first component.

An alternative to the previous arrangement is to have a first side of the bolt that has a larger diameter than a first housing of the first component, so that the bolt is inserted by pressure into said first housing.

Yet another alternative for attaching the bolt and the first component is that the latter is a part manufactured by moulding, or moulding part, such that the first side of the bolt is attached to said first component during the manufacture by moulding thereof. Thereby, the bolt would be integrated into the first component.

To facilitate the introduction and reinforce the connection between the first component and the second component, the first component has flanges around the first housing, or around the projecting bolt of the first component, which are separated by longitudinal spaces that fit into housings made around the second housing of the second component.

Preferably, the first and second components are made of aluminium and the bolt is made of steel.

From the foregoing, the attachment or connection of the first and second components is carried out by attaching, by any of the mentioned means, the first side of the bolt to the first component. Subsequently, the second side of the bolt is inserted into the housing of the second component, making the longitudinal axes of the housing of the second component and of the bolt coincide, such that the groove or grooves of said second side of the bolt face the threaded holes of the second component. Subsequently, a set screw is screwed into each hole of the second component until the tip of said screw is located in the groove of the bolt, thus completing the connection between the first and second components.

The first component may have more than one bolt attached thereto and may be connected, by means of different bolts, to different components. The same happens with the second component.

With all this, the main advantages provided by the attachment system of the invention are, essentially, the following:
- The current systems are designed to be used in wood, while the attachment mechanism object of the invention is designed for metal furniture, the behaviour of which is very different.
- The system of the invention preferably envisages a bolt that is attached to the metal part (inserted or threaded), and is secured with two set screws, thus resulting in a more robust system than the current ones.

- Other attachment systems need to be aligned in a certain position for the assembly to be able to be carried out, while the attachment mechanism of the invention does not need to be aligned, thus facilitating assembly.
- Other attachment systems leave holes or screws that are highly visible, while with the attachment mechanism of the invention only two small holes can be seen, corresponding to the heads of the set attachment screws, which can be easily concealed by means of additional covers that camouflage the screw heads.
- Most current systems require quite a few parts, while the attachment mechanism of the invention is able to work with only two parts: the bolt and a set screw, preferably with a conical tip, although it is advisable to install it with three parts: the bolt and two set screws.

### DESCRIPTION OF THE DRAWINGS

To complete the description of the present invention and in order to make the features thereof more readily understandable, the following figures are attached for illustrative and non-limiting purposes.
F igure 1 shows a perspective view of an example of a piece of aluminium furniture, an armchair, provided with the attachment mechanism object of the invention, represented with the parts and tubular profiles that it comprises disassembled and exploded, showing the inclusion of said mechanism in each one of the connection points between said parts and profiles.
F igure 2 shows a perspective view of an example of the attachment mechanism for furniture object of the invention that enables the ends of a part and a tubular profile of a piece of aluminium furniture to be connected, showing the parts and elements that it comprises, as well as the configuration and arrangement thereof, represented priorto said connection.
F igure 3 shows a cross-sectional view of the ends of the part and the tubular profile of the piece of furniture wherein the attachment mechanism is incorporated, represented once they have been connected with each other.

### PREFERRED EMBODIMENT OF THE INVENTION

In view of the figures described above, an example of an attachment system according to the present invention will now be described. Thus, as can be seen in said figures, the attachment mechanism (1), able to be applied to ensure the connection between two components, a first component or part (2) and a second component or profile (3), both preferably made of aluminium, although they could be made of other materials such as plastic, essentially comprises a bolt (4), preferably made of metal, and more preferably made of steel, which is attached to the aluminium part (2), preferably in a housing thereof, such that the bolt (4) emerges from said part (2), and one or more set screws (5) which, when inserting the bolt (4) into the housing of the profile (3), are threaded into holes (6) made on the surface of said profile (3), in such a way that the tip (5a) of said set screws (5) locks onto the surface of the bolt (4) blocking the movement thereof and, consequently, the movement between the part (2) and the profile (3).

Preferably, the bolt (4) is threaded, inserted by pressure at the end of the part (2) or is integrated into the part (2) when inserted during the moulding of said part (2), and has at least one, preferably two, conical transverse grooves (4a) machined on the surface thereof and into which the tip (5a) of the set screw or screws (5) fits.

Furthermore, the holes (6) of the lateral surface of the profile (3), on which the set screws (5) thread, are located in such a way that they are in coincidence with the aforementioned conical transverse grooves (4a) of the bolt (4).

Furthermore, in the preferred embodiment, the tip (5a) of the set screw or screws (5) is also conical in shape so that it fits into the conical grooves (4a) of the bolt (4).

Likewise, in the preferred embodiment of the invention, the head of the set screws is provided with a gap for a tool, preferably of the Allen^{®} type, so that it can be flush with the surface of the profile (3).

Thereby, the end of the tubular profile (3) is inserted on the end of the part (2) for the assembly of the parts (2) and the profiles (3) of the piece of furniture, encapsulating the bolt (4) that emerges therefrom and the set screws (5) are inserted into the holes (6) of the profile (3), threading them by means of a tool, screwdriver or preferably Allen^{®} type wrench until the conical tip (5a) thereof makes contact with the conical grooves (4a) of the bolt (4), the attachment of the connection between the part (2) and the profile (3) being carried out.

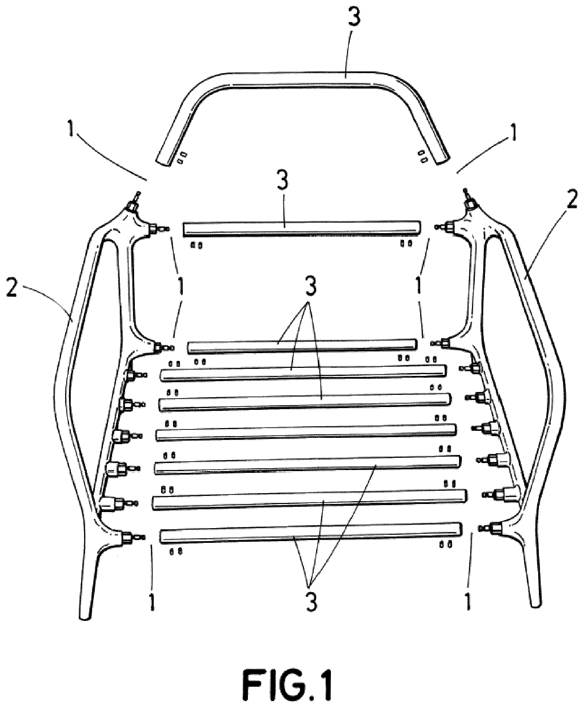

Taking into account Figure 1, it can be seen how, in an exemplary embodiment, the piece of furniture, in this example an armchair, comprises two lateral parts (2), which define the legs and armrests of the armchair, wherein a plurality of connection points provided with emerging bolts (4) and a set of central profiles (3) that connect said two lateral parts (2) defining the seat and back of the armchair have been provided, and wherein the corresponding holes (6) for the insertion of the set screws (5) have been made.

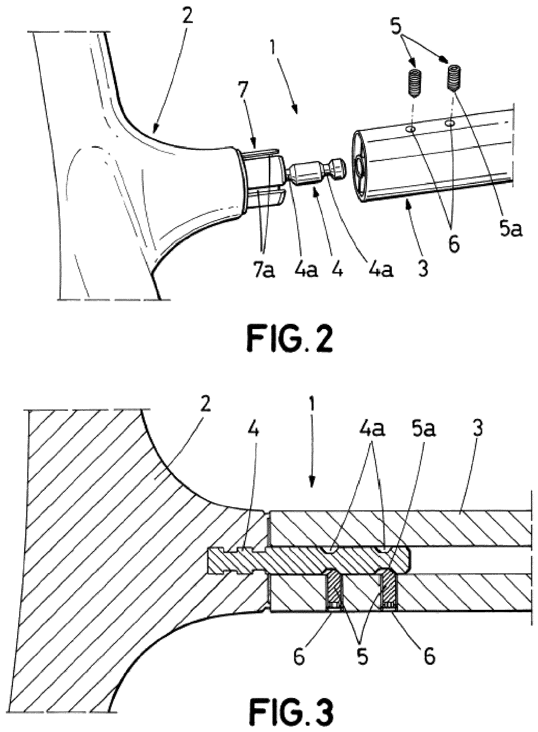

Finally, it should be noted that the end of the part (2) wherein the bolt (4) is incorporated has flanges (7) which define a tubular section, visible only in Figure 2, which fits inside the end of the profile (3) to which it is connected, longitudinal grooves or spaces between the flanges (7a) having been provided that improve the fit of said section to the inner wall of the profile (3) and serve to reinforce the connection between the part (2) and profile (3).

The invention is applicable to other pieces of furniture in addition to the armchair described above such as, for example, sofas, loungers, tables, chairs, flowerpots and lamps, among others. Depending on the design of the piece of furniture, the components will present a particular shape that enables the assembly thereof with other components to constitute the piece of furniture by using the attachment system of the invention.

## Claims

1. An attachment system between two components **characterised in that** it comprises:
- A first component (2),
- A second component (3) with a second housing and at least one threaded hole (6) with the longitudinal axis thereof perpendicular to the longitudinal axis of said second housing,
- An attachment bolt (4) with two sides, a first attachment side inserted into the first component (2), and a second connection side, opposite the first side, for inserting it into the second housing of the second component (3), and said second side having at least one perimetral groove (4a) that coincides with the at least one hole (6) when said second side is inserted into the second housing of the second component (3), and
- a connection screw (5) between the second component (3) and the bolt (4) by means of inserting it through the at least one hole (6).

2. The system according to claim 1, **characterised in that** the perimetral groove (4a) is conical.

3. The system according to any of the preceding claims, **characterised in that** the first side of the bolt (4) and a first housing in the first component (2) comprise a complementary thread for attaching the bolt (4) to the first component (2).

4. The system according to any of the preceding claims, **characterised in that** the first side of the bolt (4) is larger in diameter than a first housing in a first component (2) for attaching the bolt (4) by pressure to the first component (2).

5. The system according to any of the preceding claims, **characterised in that** the first component (2) is a part manufactured by moulding.

6. The system according to claim 5, **characterised in that** the first component (2) has the first side of the bolt (4) attached to the first component (2) during the manufacture thereof by moulding, the bolt (4) thus being integrated into said first component (2).

7. The system according to any of the preceding claims, **characterised in that** the first and second components are made of aluminium.

8. The system according to any of the preceding claims, **characterised in that** the bolt is made of steel.

9. The system according to any of the preceding claims, **characterised in that** the second component has perimetral housings around the second housing.

10. The system according to claim 9, **characterised in that** the first component (2) has flanges (7) separated by spaces (7a) around the first housing to fit into the housings made around the second housing of the second component (3).

11. The system according to claim 2, **characterised in that** the tip (5a) of the screw (5) is conical in shape, so that it fits into the conical grooves (4a) of the bolt (4).
